# EUROPÄISCHE PATENTSCHRIFT

(11) **EP 2 072 290 B1**
(45) Veröffentlichungstag und Bekanntmachung des Hinweises auf die Patenterteilung: **11.04.2012**
(21) Anmeldenummer: 08105975.0
(22) Anmeldetag: 12.12.2008
(51) Int. Cl.: B60C 23/00

(54) **Reifendruckregelanlage sowie Drehdurchführung dafür**
Tyre pressure regulating assembly and turning duct for same
Installation de réglage de la pression des pneus et passage tournant correspondant

(30) Priorität: 14.12.2007 DE 202007017617 U
(43) Veröffentlichungstag der Anmeldung: 24.06.2009
(73) Patentinhaber: PTG Reifendruckregelsysteme GmbH, 41468 Neuss (DE)
(72) Erfinder: Breuer, Reinhard, 41468, Neuss (DE); Haag, Christopher, 50737, Köln (DE); Tigges, Martin, 41468, Neuss (DE)
(74) Vertreter: Haverkamp, Jens

(56) Entgegenhaltungen:
- EP-A- 0 864 450
- WO-A-89/08031
- WO-A-03/031210
- WO-A-2006/063970
- DE-C1- 3 503 348
- US-A- 4 696 334

## Beschreibung

Die Erfindung betrifft eine Reifendruckregelanlage für ein Kraftfahrzeug, umfassend eine einen Stator und einen Rotor aufweisende Drehdurchführung zum Übertragen von Druckluft, zugeführt von einer fahrzeugseitig angeordneten Druckluftquelle, an das drehbar gelagerte, den Reifen tragende Rad, eine den Rotor der Drehdurchführung mit dem Reifen verbindende Luftleitung sowie einen mit seinen Signalen eine fahrzeugseitig angeordnete Steuereinrichtung beaufschlagenden Drucksensor, wobei der Drucksensor als Teil einer Drucksensoreinheit dem drehbar gelagerten Rad sowie der Drehdurchführung eine berührungslos ausgelegt arbeitende Energieübertragungseinheit zum Übertragen von für den Betrieb der Drucksensoreinheit benötigter elektrischer Energie zugeordnet sind, welche Energieübertragungseinheit zum Übertragen der Energie über zumindest ein Antennenpaar verfügt, von welchen beiden Antennen eines Antennenpaares eine Antenne statorseitig und die andere Antenne rotorseitig und die Antennen bezüglich eines den Rotor von dem Stator trennenden Bewegungsspaltes einander gegenüberliegend angeordnet sind. Die Erfindung betrifft des Weiteren eine Drehdurchführung für eine solche Reifendruckregelanlage.

Reifendruckregelanlage für ein Kraftfahrzeug, umfassend eine einen Stator und einen Rotor aufweisende Drehdurchführung zum Übertragen von Druckluft, zugeführt von einer fahrzeugseitig angeordneten Druckluftquelle, an das drehbar gelagerte, den Reifen tragende Rad, eine den Rotor der Drehdurchführung mit dem Reifen verbindende Luftleitung sowie einen mit seinen Signalen eine fahrzeugseitig angeordnete Steuereinrichtung beaufschlagenden Drucksensor.

Reifendruckregelanlagen werden bei Kraftfahrzeugen, etwa bei Nutzfahrzeugen, wie Lastkraftwagen, Schleppern oder Erdbewegungsmaschinen eingesetzt, um den in dem Reifen befindlichen Reifendruck an unterschiedliche Betriebssituationen des Kraftfahrzeuges anpassen zu können. Eine Reifendruckanpassung erfolgt vornehmlich in Abhängigkeit von dem zu befahrenden Untergrund. Durch den Reifendruck kann die Aufstandsfläche des Reifens verändert werden. Ein Reifen weist bei einem geringeren Reifendruck eine größere Aufstandsfläche auf als mit höherem Reifendruck. Aus diesem Grunde wird man bei weichem Untergrund lieber mit einem geringeren Reifendruck und mit höherer Aufstandsfläche fahren als auf einer befestigten Fahrbahn. Der Reifendruck kann auch in Abhängigkeit von dem jeweiligen Beladungszustand geändert werden.

Derartige Reifendruckregelanlagen verfügen über eine Drehdurchführung, um zum Erhöhen des Reifeninnendruckes Druckluft von einer fahrzeugseitigen Druckluftquelle an das drehbar gelagerte Rad zu übertragen. Eine solche Drehdurchführung umfasst einen fahrzeugseitig angeordneten Stator und einen durch einen Bewegungsspalt von diesem getrennten, radseitig angeordneten Rotor. Stator und Rotor sind koaxial zur Drehachse des Rades angeordnet. Zur Druckluftübertragung verfügen Stator und Rotor über ringförmige einander bezüglich des Bewegungsspaltes gegenüberliegende und zueinander weisend offene Nuten oder Kammern, die durch aktivierbare Dichtungen, wie in EP 1 095 799 B1 beschrieben, für den Zeitpunkt der Druckluftübertragung zur Ausbildung einer Druckluftübertragungskammer abgedichtet werden. Radseitig ist an den Rotor der Drehdurchführung eine zur Felge führende Luftleitung vorgesehen. Diese durchgreift die Felge in einer Öffnung und mündet in das Reifeninnere. In die radseitige Luftleitung ist ein ansteuerbares Ventil eingeschaltet, welches für den Vorgang der Reifendruckregelung geöffnet und nach Abschluss des Vorganges geschlossen ist. Die Druckluft selbst wird mit einem fahrzeugseitig angeordneten Kompressor bereitgestellt. Als Kompressor dient typischerweise der bei derartigen Fahrzeugen ohnehin zum Betreiben der Bremsanlage vorhandene Kompressor.

Zum Einstellen oder Ändern des Reifeninnendruckes sind unterschiedliche Verfahren bekannt geworden. In DE 27 36 603 A1 ist ein zeitgetaktetes Reifendruckänderungsverfahren beschrieben. Dieses Verfahren geht von einem definierten Reifendruck und definierten Befüll- und Entnahmezeiten aus, in denen der Reifeninnendruck um ein definiertes Maß geändert werden kann. Aus diesem Grunde kann bei dieser vorbekannten Reifendruckregelanlage eine Änderung des Reifendruckes nur in festgelegten Schritten erfolgen. Individuell kann der Reifeninnendruck bei einem solchen Verfahren nicht eingestellt werden. Eine solche Reifendruckregelanlage benötigt daher keinen Drucksensor.

In DE 26 30 511 A1 ist eine weitere Reifendruckregelanlage beschrieben. Bei dieser Reifendruckregelanlage ist eine gepulste Befüllung bzw. Entlüftung vorgesehen. Das Befüllen oder Entlüften eines Reifens erfolgt in diskreten Befüllungs- bzw. Entlüftungsschritten. An jeden Befüllungs- bzw. Entlüftungsschritt schließt sich der Schritt des Messens des Reifeninnendruckes an, damit im Anschluss an die Auswertung des ermittelten Reifeninnendruckes der nachfolgende Befüllungspuls oder Entlüftungspuls entsprechend gesteuert werden kann. Dieses Verfahren wiederholt sich so lange, bis der gewünschte Reifeninnendruck eingestellt worden ist. Um dieses iterative Befüllungs- bzw. Entlüftungsverfahren durchzuführen, ist fahrzeugseitig an die Luftleitung ein Drucksensor angeschlossen. Gemessen wird der Reifeninnendruck bei der aus diesem Dokument bekannten Reifendruckregelanlage in einer Befüllungs- bzw. Entlüftungspause, und zwar erst nachdem sich nach Beendigung eines Befüllungs- bzw. Entlüftungspulses die Luftbewegung innerhalb der Luftleitungen beruhigt hat. Mit dieser Reifendruckregelanlage können beliebige Reifendrücke eingestellt werden. Das Durchführen dieses Verfahrens benötigt jedoch eine gewisse Zeit. Dieses ist zum einen durch Einhalten der notwendigen Druckmesspausen beim Befüllen oder Entlüften bedingt. Zum anderen hat die zentrale Anordnung des Drucksensors zur Folge, dass eine Reifendruckänderung jeweils nur in einem einzigen Reifen erfolgen kann.

In der in DE 35 86 727 T2 beschriebenen Reifendruckregelanlage ist der Drucksensor wie auch beim Gegenstand der DE 26 30 511 A1 kraftfahrzeugseitig angeordnet. Im Unterschied zu dieser Reifendruckregelanlage wird bei der Reifendruckregelanlage gemäß DE 35 86 727 T2 der in dem kraftfahrzeugseitigen Luftleitungssystem herrschende Druck beim Vorgang des Befüllens bzw. Entlüftens des Reifens gemessen. Zwar kann mit dieser Reifendruckregelanlage rascher eine Reifendruckumstellung in jedem Reifen erfolgen. Gleichwohl ist es notwendig, zur Reifendruckänderung die gewünschte Änderung bei jedem Reifen individuell durchzuführen. Überdies ist bei dieser Reifendruckregelanlage bzw. bei dem in diesem Dokument beschriebenen Verfahren zur Reifendruckregelung zu berücksichtigen, dass die erfassten Druckmesswerte durch Störfaktoren überlagert sind, insbesondere Störfaktoren, resultierend aus der Dynamik des Strömens der Luft in den Leitungen.

Weitere Reifendruckregelanlagen gemäß dem Oberbegriff des Anspruchs 1 sind aus US 4 696 334 A und WO 89/08031 A1 bekannt. Bei den in diesen Dokumenten beschriebenen Reifendruckregelanlagen ist der Drucksensor dem drehbar gelagerten Rad zugeordnet. Zum Übertragen von Energie oder Daten von einem statorseitigen Steuergerät an bzw. von dem Drucksensor verfügt die Reifendruckregelanlage über eine berührungslos ausgelegt arbeitende Energieübertragungseinheit. Diese umfasst zwei in radialer Richtung zueinander angeordnete Spulen - eine statorseitig angeordnete Primärspule und eine rotorseitig angeordnete Sekundärspule. Die beiden Spulen sind durch einen notwendigerweise zwischen dem Stator und dem Rotor vorhandenen Bewegungsspalt getrennt. Die Spulen bilden Antennen, so dass Energie von der Primärspule auf die Sekundärspule und damit dem Drucksensor und anderen, dem Rad zugeordneten Aktoren, wie beispielsweise einem elektromagnetischen Ventil, zugeführt werden kann. In den Pausen einer Stromübertragung können über die Antenne Steuerimpulse gesendet oder umgekehrt Daten von dem Drucksensor ausgelesen und an die fahrzeugseitig angeordnete Steuereinheit übertragen werden. Auch wenn vom Prinzip her die in diesen Dokumenten beschriebene Stromübertragung Vorteile bringt, ist die Herstellung der Antennen relativ aufwendig. Diese bestehen aus gewickelten Spulen. Wenn mit diesen auch Daten übertragen werden sollen, müssen diese möglichst frei von mechanischen Fehlern gewickelt sein, da ansonsten die Gefahr von veränderten Übertragungskapazitäten und damit einer Verfälschung übertragener Signale besteht. Darüber hinaus ist bei der Auslegung der Antennen die Weite des notwendigerweise einzuhaltenden Bewegungsspaltes zu berücksichtigen.

In WO 03/031210 A1 wird eine Übertragungsvorrichtung zur Erfassung von Reifenzustandsgrößen vorgeschlagen, bei der in der Radnabe eine Koppeleinrichtung integriert ist, deren Elemente sich durch einen engen Luftspalt getrennt einander gegenüberstehen; eine Durchführung von Luft erfolgt dabei nicht.

Ausgehend von dem diskutierten Stand der Technik liegt der Erfindung daher die Aufgabe zugrunde, eine eingangs genannte Reifendruckregelanlage bzw. Drehdurchführung dafür dergestalt weiterzubilden, dass die Energieübertragungseinheit nicht nur kostengünstiger hergestellt werden kann, sondern diese auch weniger fehlerträchtig ist.

Diese Aufgabe wird erfindungsgemäß durch eine eingangs genannte, gattungsgemäße Reifendruckregelanlage bzw. Drehdurchführung dafür gelöst, bei der die Antennen, durch den Bewegungsspalt getrennt, axial nebeneinander liegend angeordnet sind.

Bei dieser Reifendruckregelanlage ist der Drucksensor dem Rad zugeordnet. Zur Energieversorgung des Drucksensors dient eine Energieübertragungseinheit, mit der die für den Betrieb des Drucksensors benötigte elektrische Energie vom Fahrzeug, etwa von dem Energienetz des Fahrzeuges auf das drehbar gelagerte Rad übertragen wird. Hierbei macht man sich das Vorhandensein der für die Luftübertragung vorhandenen Drehdurchführung zunutze, indem die Energieübertragungseinheit der Drehdurchführung zugeordnet ist. Stator und Rotor der Drehdurchführung werden als Träger für die beiden Antennen eines der Energieübertragungseinheit zugeordneten Antennenpaares genutzt, wobei eine Antenne dem Stator und die andere Antenne dem Rotor zugeordnet ist. Für die gewünschte Energieübertragung sind die beiden Antennen einander gegenüberliegend bezüglich des den Rotor vom Stator trennenden Bewegungsspaltes angeordnet, und zwar in einer axialen Anordnung zueinander. Je nach Ausgestaltung der Energieübertragungseinheit kann die Energieübertragung induktiv oder auch kapazitiv erfolgen. Die axiale Anordnung der beiden typischerweise als Spulen ausgeführten Antennen in axialer nebeneinander angeordneter Anordnung hat zur Folge, dass die Antennen stirnseitig einander zugewandt sind. Diese weisen vorzugsweise jeweils einen gleichen Durchmesser auf. Der die beiden Antennen trennende Bewegungsspalt kann minimal bemessen sein, da sich dieser quer zur Rotationsachse des Rades erstreckt und Unrundheiten in der Rotation des Rotors gegenüber dem Stator sich nicht bemerkbar machen. Dieses gewährleistet das Vorhandensein eines zwischen den Antennen befindlichen Bewegungsspaltes, der über den Umfang gesehen eine gleich bleibende Weite aufweist, wodurch die Übertragungsqualität, insbesondere beim Übertragen von Daten verbessert ist.

Die Antennen sind vorzugsweise konzentrisch zur Achse der Drehdurchführung und damit konzentrisch zur Drehachse des Rades angeordnet. Eine Energieübertragung ist unabhängig von einer Bewegung des Rotors gegenüber dem Stator möglich, so dass die Drucksensoreinheit jederzeit arbeiten kann. Es hat sich gezeigt, dass der Einsatz von Ringantennen zweckmäßig ist. Diese können auf dem Rotor bzw. Stator aufgeklebt sein oder in entsprechend in diese eingebrachte ringförmige Nuten eingelassen sein. Bevorzugt ist eine Ausgestaltung, bei der die Antennen als auf einer Ringplatine aufgedruckte Leiter ausgeführt sind. Dieses ermöglicht nicht nur eine kostengünstige Herstellung der Antennen bzw. Antennenspulen, sondern auch eine Herstellung unter Einhaltung enger Toleranzen, so dass ein unerwünschtes Übertragen von Kapazitäten quasi ausgeschlossen ist.

Teil der Drucksensoreinheit ist ein Signalgeber, mit dem das gemessene Drucksignal an eine fahrzeugseitig angeordnete Steuereinrichtung übertragen werden kann. Hierbei kann es sich um eine Einrichtung zum Modulieren des rotorseitig empfangenen elektrischen Stroms handeln. Bei diesem Lastmodulationsverfahren wird in Abhängigkeit von dem erfassten Druckmesssignal der Stromverbrauch der Drucksensoreinheit geändert und dieses fahrzeugseitig über die Steuereinrichtung beobachtet. Gemäß einer anderen Ausgestaltung ist vorgesehen, dass zum Übertragen des Druckmesssignals an eine fahrzeugseitig angeordnete Steuereinrichtung die Drucksensoreinheit über einen Sender verfügt, damit das Druckmesssignal auf einer Funkstrecke übertragen werden kann. Vorzugsweise erfolgt dieses auf einer HF-Strecke. Fahrzeugseitig steht ein entsprechender Empfänger, beispielsweise als Teil der Steuereinheit, zum Empfang des von einer Druckmesseinrichtung gesendeten Signals bereit.

Das Anordnen des Drucksensors am Rad bietet die Möglichkeit, den Reifeninnendruck gleichzeitig bei allen Rädern des Kraftfahrzeuges, die Teil der Reifendruckregelanlage sind, ändern zu können. Überdies bietet die Anordnung des Drucksensors am Rad den Vorteil, den zu messenden Luftdruck im Reifen selbst zu erfassen und somit unbeeinflusst oder jedenfalls weitgehend unbeeinflusst von die Druckmessung beeinflussenden Störfaktoren. Daher kann die Durchführung einer Reifendruckänderung nicht nur in kurzer Zeit durchgeführt werden, sondern der Reifendruck selbst lässt sich sehr exakt messen und daher einstellen.

Eine Kommunikation zwischen der Drucksensoreinheit und einer fahrzeugseitigen Steuereinrichtung kann auch bidirektional konzipiert sein. In einem solchen Fall ist es möglich, Signale an die Drucksensoreinheit zu übertragen. Dieses kann gewünscht sein, wenn zur Reduzierung eines Energieverbrauches der Drucksensor bzw. die Drucksensoreinheit bei Nichtgebrauch in einen Schlaf- oder Ruhemodus geschaltet ist, diese durch ein Wecksignal in ihren Betriebsmodus zu schalten. Verfügt die Drucksensoreinheit über einen Sender zum Übertragen des Druckmesssignals an eine fahrzeugseitig angeordnete Steuereinrichtung, bedarf es nur eines geringen Mehraufwandes, anstelle eines einzelnen Senders eine Sende-Empfangs-Einheit anzuordnen. Ist die Drucksensoreinheit Teil einer ohnehin radseitig angeordneten Ventileinheit, besteht die Möglichkeit, auch diese beispielsweise über ein Funksignal ansteuern zu können. Aufgrund der vorhandenen Energieübertragung können der Ventileinheit auch elektrische Aktoren zugeordnet sein. Anstelle der vorbeschriebenen Kommunikation unter Verwendung einer Funkstrecke, kann diese in Energieübertragungspausen auch leitungsgebunden über die Energieübertragungseinheit zwischen dem oder den radseitigen Aktoren und dem stator- bzw. fahrzeugseitig angeordneten Steuergerät oder in umgekehrter Richtung erfolgen.

Bei einer Weiterbildung ist der Drucksensor dergestalt ausgebildet oder angeordnet, dass die Druckmessung innerhalb des Reifens an einer, bei einer Reifendruckänderung durch die strömende Luft unbeeinflussten oder weitestgehend unbeeinflussten Stelle erfolgt. Zu diesem Zweck kann vorgesehen sein, dass die Drucksensoreinheit an anderer Stelle an der Felge des Rades angeordnet ist als diejenige Stelle, durch die zum Befüllen die Luft in den Reifen eingefüllt bzw. aus diesem herausgeführt wird. Diese Stelle befindet sich vorzugsweise bezüglich der Drehachse des Rades an der der Luftzuführung bzw. Entnahme gegenüberliegenden Seite. Die Drucksensoreinheit bzw. der Drucksensor kann über eine, an einer solchen Stelle eingebrachten Öffnung in Verbindung mit dem Reifeninneren gestellt sein. Ist das Einbringen einer zweiten Felgenöffnung nicht gewünscht, kann vorgesehen sein, die Drucksensoreinheit außenseitig an der Felge an derjenigen Stelle anzuordnen, an der der Reifen befüllt bzw. entleert wird. Somit kann bei einer solchen Ausgestaltung der Drucksensor bzw. die Drucksensoreinheit Teil der typischerweise an dieser Stelle platzierten Ventileinheit sein. Durch die Befüllungs- bzw. Entlüftungsöffnung kann eine Messleitung geführt werden, die sich innerhalb des Reifens bis an eine Stelle erstreckt, die von der Turbulenz der Luftströmungen beim Befüllen oder Entlüften weitgehend unbeeinflusst ist. Beispielsweise kann sich eine solche Messleitung ausgehend von der Befüllungs- bzw. Entlüftungsöffnung über einen Winkelbetrag von 180° erstrecken, damit das freie, offene Ende der Messleitung an der der Befüllungs- bzw. Entlüftungsöffnung gegenüberliegenden Seite angeordnet ist. Die Messleitung weist ein offenes Ende auf, so dass innerhalb der Messleitung derjenige Druck herrscht, der an der Mündung der Messleitung anliegt. Diesen Druck misst der Drucksensor. Bei dieser Reifendruckregelanlage kann der Befüllungs- bzw. Entlüftungsvorgang hinsichtlich der Druckänderung sehr exakt beobachtet werden, insbesondere ohne dass hierzu der Vorgang des Befüllens oder des Entlüftens unterbrochen werden muss.

Zur Energieversorgung dieses Drucksensors bzw. dieser Drucksensoreinheit wird eine Energieübertragungseinheit, wie diese zuvor beschrieben worden ist, eingesetzt.

Nachfolgend ist die Erfindung anhand von Ausführungsbeispielen unter Bezugnahme auf die beigefügten Figuren beschrieben. Es zeigen:
- **Fig. 1:**: eine schematisierte Schnittdarstellung durch eine im Bereich der Nabe des Rades eines Kraftfahrzeuges angeordnete Drehdurch- führung zusammen mit dem Ausschnitt eines Rades,
- **Fig. 2:**: eine vergrößerte Darstellung der Drehdurchführung der Figur 1,
- **Fig. 3:**: eine schematisierte Schnittdarstellung durch das Rad der Figur 1 in Radebene und
- **Fig. 4:**: eine schematisierte Schnittdarstellung entsprechend derjenigen der Figur 2 gemäß einer weiteren Ausgestaltung der Erfindung.

Ein im Übrigen nicht näher dargestelltes Kraftfahrzeug verfügt über eine Reifendruckregelanlage. Mit der Reifendruckregelanlage kann der Reifeninnendruck der Reifen des Kraftfahrzeuges geändert werden. Nachfolgend sind die zum Beschreiben der Erfindung relevanten Bestandteile der Reifendruckregelanlage anhand eines der Kraftfahrzeugreifen beschrieben. Die diesbezüglichen Ausführungen gelten für die weiteren Kraftfahrzeugreifen gleichermaßen.

Die Reifendruckregelanlage verfügt über eine jedem Rad zugeordnete Drehdurchführung 1, umfassend einen Stator 2 und einen Rotor 3. Der Stator 2 ist fahrzeugseitig in nicht näher dargestellter Art und Weise gehalten. Der Rotor 3 ist radseitig angeordnet und Teil der insgesamt mit dem Bezugszeichen 4 gekennzeichneten Nabe. An der Nabe 4 sind die zum Befestigen des Rades 5 benötigten Radbolzen 6 gehalten. Die Drehdurchführung 1 dient zum Übertragen von Druckluft von einer fahrzeugseitigen Druckluftquelle, beispielsweise einem Kompressor auf den Rotor 3 bzw. in den von dem Rad 5 getragenen Reifen 7. Von dem Rotor 3 erstreckt sich eine Luftleitung 8 sowie eine Steuerleitung 9 bis zu einer Ventileinheit 10. Die Ventileinheit 10 ist bei dem dargestellten Ausführungsbeispiel an der radial nach innen weisenden Unterseite der Felge 11 des Rades 5 angeordnet. Teil der Ventileinheit 10 ist ein die Felge 11 durchgreifendes Rohrstück 12. Durch das Rohrstück 12 wird in das Reifeninnere 13 in Abhängigkeit von der gewünschten Reifeninnendruckänderung Luft eingebracht oder entnommen. Die Ventileinheit 10 verfügt über ein nicht näher dargestelltes Ventil, das bei einer Reifendruckänderung geöffnet und ansonsten geschlossen ist. Bei dem dargestellten Ausführungsbeispiel ist dieses Ventil über die Steuerleitung 9 pneumatisch ansteuerbar.

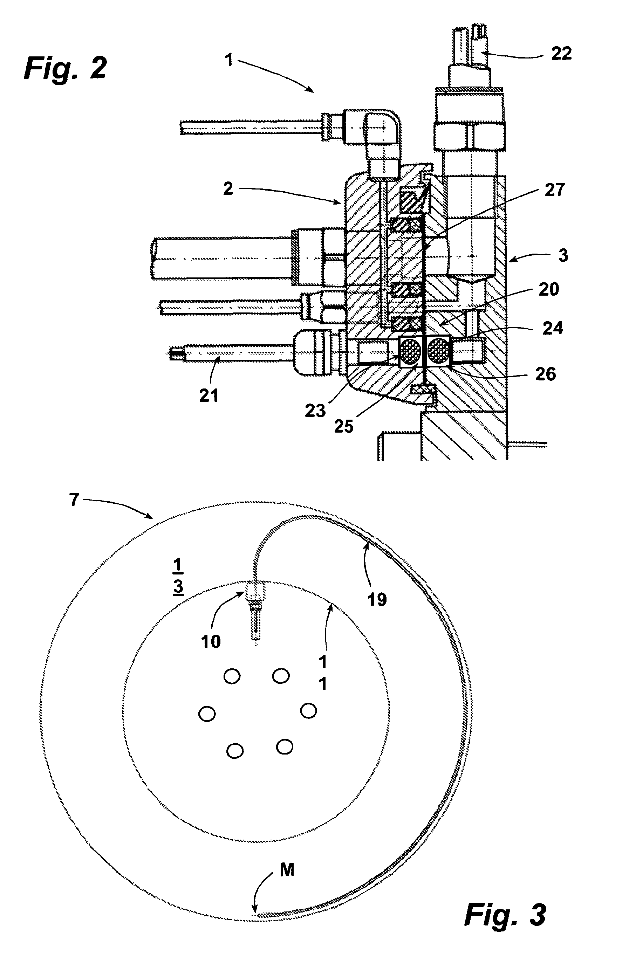

Teil der Ventileinheit 10 ist ferner eine Drucksensoreinheit 14. Die Drucksensoreinheit 14 umfasst einen Drucksensor 15 sowie einen Sender 16, mit dem ein von dem Drucksensor 15 erfasstes Druckmesssignal an eine fahrzeugseitig angeordnete Steuereinrichtung 17 gesendet wird. Zu diesem Zweck ist der Drucksensor 15 mit dem Sender 16 durch eine Signalleitung 18 verbunden. Der Drucksensoreinheit 14 ist des Weiteren ein Messschlauch 19 zugeordnet, der sich durch das Rohrstück 12 in das Reifeninnere 13 hinein erstreckt. Im Reifeninneren 13 ist der Messschlauch 19, wie aus Figur 3 ersichtlich, bis an eine der Ventileinheit 10 bezüglich der Drehachse des Rades 5 gegenüberliegende Stelle geführt. Das an dieser Stelle innerhalb des Reifeninneren 13 befindliche Schlauchende ist geöffnet. Somit wird mit dem Drucksensor 15 der im Reifeninneren 13 herrschende Druck an der der Ventileinheit 10 gegenüberliegenden Stelle erfasst, die auch als Messstelle M in Figur 3 markiert ist.

Grundsätzlich ist es auch möglich, den Drucksensor selbst an einer Stelle anzuordnen, die durch die bei einer Reifeninnendruckänderung strömenden Luft unbeeinflusst oder weitgehend unbeeinflusst ist.

Zur Energieversorgung der elektrisch arbeitenden Drucksensoreinheit 14 ist der Drehdurchführung 1 eine Energieübertragungseinheit 20 zugeordnet. Die Energieübertragungseinheit 20 dient zum Übertragen von elektrischer Energie aus dem Bordnetz des Kraftfahrzeuges auf den radseitigen Rotor 3. Zugeführt wird die elektrische Energie mittels eines Kabels 21, welches den statorseitigen Teil der Energieübertragungseinheit 20 beaufschlagt. Von dem rotorseitigen Teil der Energieübertragungseinheit 20 wird die rotorseitig empfangene Energie über ein Kabel 22 der Drucksensoreinheit 14 zugeführt.

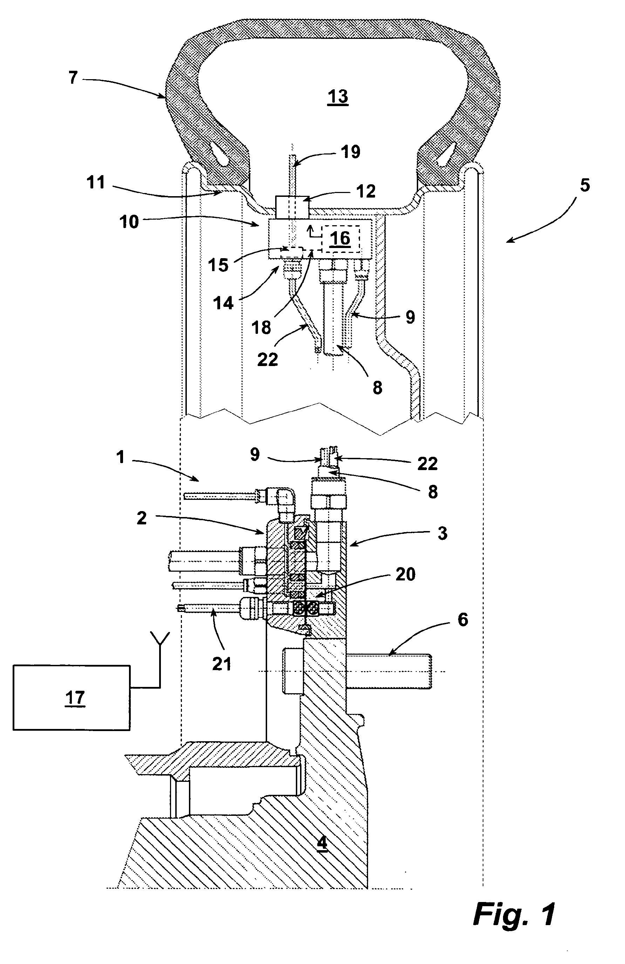

Zwischen den rotorseitig abgehenden Leitungen 8, 9 und dem Energiekabel 22 und den diesbezüglich an der Ventileinheit 10 bzw. der Drucksensoreinheit 14 ankommenden Leitungen 8, 9 bzw. Kabel 22 befindet sich eine in Figur 1 nicht gezeigte Leitungs- und Kabelkupplung, damit beim Abnehmen des Rades 5 von der Nabe 4 die Leitungen 8, 9 bzw. das E-nergieversorgungskabel 22 getrennt werden können.

Die Drehdurchführung 1 ist, wie in Figur 2 in einer vergrößerten Darstellung gezeigt, zum Übertragen der Druckluft prinzipiell aufgebaut wie die in EP 1 095 799 B1 beschriebene, wobei durch diese explizite Inbezugnahme auf EP 1 095 799 B1 der Offenbarungsgehalt dieses Dokumentes gleichfalls zum Gegenstand der Offenbarung dieser Ausführungen gemacht wird.

Die Energieübertragungseinheit 20 ist bei dem dargestellten Ausführungsbeispiel induktiv arbeitend ausgelegt. Zu diesem Zweck verfügt die Energieübertragungseinheit 20 über eine statorseitig angeordnete Antenne 23 sowie über eine rotorseitig angeordnete Antenne 24. Beide Antenennen 23, 24 sind durch Spulen, wie schematisiert in Figuren 1 und 2 dargestellt, gebildet. Beide Antennen 23, 24 sind jeweils in einer in den Stator 2 bzw. den Rotor 3 eingebrachte Ringnut 25 bzw. 26 angeordnet. In der jeweiligen Ringnut 25 bzw. 26 sind bei dem dargestellten Ausführungsbeispiel die Spulen mittels eines Harzes vergossen. Die Ringnuten 25, 26 sind konzentrisch zur Drehachse der Nabe 4 verlaufend angeordnet. Die Nuten 25, 26 sind zueinander weisend offen und liegen einander bezüglich des zwischen dem Rotor 3 und dem Stator 2 befindlichen Bewegungsspaltes 27 gegenüber.

Sowohl der Stator 2 als auch der Rotor 3 sind aus einem Eisenmetall hergestellt. Aufgrund der konzentrischen Anordnung der beiden Spulen 23, 24 zueinander ist bei entsprechender Auslegung des die Sendespule 23 beaufschlagenden elektrischen Feldes eine Energieübertragung auch möglich, wenn eine Relativbewegung zwischen Rotor 3 und Stator 2 nicht stattfindet. Die von der Sendespule 23 auf die Empfängerspule 24 übertragene Energie wird über das Energiekabel 22, wie zu Figur 1 beschrieben, der Drucksensoreinheit 14 zugeführt. Mit der übertragenen Energie werden der Drucksensor 15 und der Sender 16 betrieben.

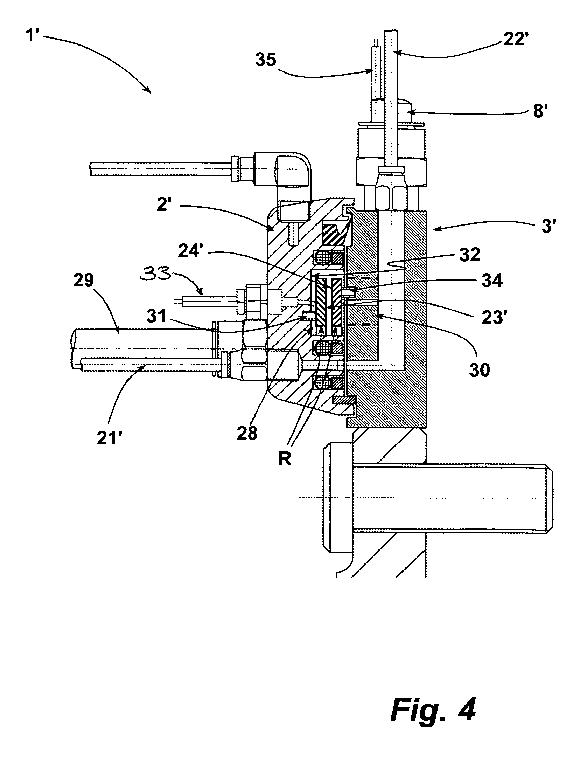

Figur 4 zeigt eine Anordnung, wie diese prinzipiell bereits zu Figur 1 und 2 beschrieben ist. Daher sind gleiche Bauteile bei dem Ausführungsbeispiel der Figur 4 mit gleichen Bezugszeichen wie in dem Ausführungsbeispiel den Figuren 1 und 2, ergänzt um "Apostroph" gekennzeichnet.

Im Unterschied zu der Anordnung der Energieübertragungseinheit 20 des Ausführungsbeispiels der Figuren 1 und 2 sind die Antennen 23', 24' der Energieübertragungseinheit 20' der Drehdurchführung 1' der Figur 4 in einem dem Stator 2' zugeordneten Luftführungskanal 28 angeordnet. Der Luftführungskanal 28 ist als konzentrisch zur Drehachse des Rotors 3' ausgeführte Ringnut in den Stator 2' eingebracht und steht in Verbindung mit der fahrzeugseitigen Luftleitung 29. Der Rotor 3' verfügt über eine in Figur 4 gestrichelt dargestellte Anschlussbohrung 30, die die rotorseitige Luftleitung 8' mit dem Luftführungskanal 28 verbindet.

Die beiden Antennen 23', 24' sind als jeweils auf einer Ringplatine R aufgedruckte Leiterbahnen ausgeführt. Diese befinden sich an den jeweils zueinander weisenden Seiten der Ringplatinen R. Die Antenne 23' ist zum Herbeiführen einer elektrischen Isolierung mittels Sockelschrauben 31 sowohl vom Boden 32 der Luftführungskammer 28 als auch von den beiden Nutenwänden beabstandet gehalten. Über eine elektrische Anschlussleitung 33 ist die Antenne 23' an eine Energieversorgungseinheit sowie an ein Steuergerät angeschlossen. Die rotorseitige Antenne 24' ist ebenfalls mittels Sockelschrauben 34 an der zu dem Stator 2' weisenden Seite des Rotors 3' festgelegt, und zwar dergestalt, dass die Antenne 24' sowohl von den Seitenwänden der Luftführungskammer 28 als auch von der zu dem Stator 2' weisenden Oberfläche des Rotors 3' beabstandet ist. Durch diese Anwendung sind beide Antennen 23', 24' durch die umgebende Luft isoliert von den angrenzenden Bauteilen in der Luftführungskammer 28 gehalten. Zwischen den beiden Antennen 23', 24' befindet sich ein Abschnitt des den Stator 2' von dem Rotor 3' trennenden Bewegungsspaltes. Die Weite des die Antennen 23', 24' trennenden Bewegungsspaltes ist über den Umfang gesehen gleich bleibend. Die Anordnung der Antennen 23', 24' in der Luftführungskammer 28 beeinträchtigt eine Luftübertragung nicht. Darüber hinaus befinden sich die Antennen 23', 24' an einem durch die Dichtungen geschützten Bereich.

Die Antenne 24' ist über eine Anschlussleitung 35 an eine in den Figuren nicht dargestellte Drucksensoreinheit, umfassend einen Drucksensor und ein Stellventil angeschlossen.

Im Unterschied zu der in den Figuren 1 und 2 ist bei dem Ausgestaltungsbeispiel der Figur 4 eine Datenkommunikation zwischen einem fahrzeugseitigen Steuergerät und der Drucksensoreinheit leitungsgebunden über die Anschlussleitungen 33, 35 und die Energieübertragungseinheit 20'. Daten werden vorzugsweise innerhalb von Pausen einer Energieübertragung von der einen auf die andere Einheit übertragen. Daten können beispielsweise in Form von Energiepulsen übertragen werden.

Mit den beschriebenen Reifendruckregelanlagen, bei der jedem Reifen eine Drucksensoreinheit und jeder Drehdurchführung eine Energieübertragungseinheit zugeordnet sind, kann eine Reifendruckmessung jederzeit erfolgen und insbesondere ohne dass zum Betrieb des Drucksensors bzw. der Drucksensoreinheit grundsätzlich eine Batterie benötigt wird. Das Messen des Reifeninnendruckes kann bei allen an die Reifendruckregelanlage angeschlossenen Reifen quasi gleichzeitig erfolgen; es ist lediglich Sorge dafür zu tragen, dass die ermittelten Druckmesswerte nicht gleichzeitig an die Steuereinrichtung übertragen werden. Die von den einzelnen Reifen gesendeten Druckmesssignale werden mit einem den jeweiligen Reifen identifizierenden Code gesendet, so dass die von der Steuereinrichtung empfangenen Druckmessdaten jedem einzelnen Reifen zugeordnet werden können. Anstelle des Sendens eines Codes oder auch zusätzlich kann eine Reifendruckmessung für alle Reifen auch nach einem vorgegebenen Messschema vorgenommen werden. Das gleichzeitige oder quasi gleichzeitige Erfassen des Reifeninnendruckes der an die Reifendruckregelanlage angeschlossenen Reifen erlaubt, dass eine Reifendruckänderung im Bedarfsfalle bei allen Reifen gleichzeitig durchgeführt wird. Dieses gilt sowohl für ein Befüllen der Reifen als auch für eine Entlüftung derselben. Das Anordnen der Messstelle zum Messen des Reifeninnendruckes durch den Messschlauch und somit an einer Messstelle, die von Strömungsturbulenzen infolge der zum Befüllen oder Entlüften eines Reifens strömenden Luft unbeeinflusst ist, gestattet eine sehr exakte Reifeninnendruckmessung auch bei laufendem Befüllungs- oder Entlüftungsbetrieb. Daher kann durch eine entsprechend getaktete Druckmessfolge bei einem Befüllen des Reifens die Reifeninnendruckerhöhung oder bei einer Entlüftung die entsprechende Druckerniedrigung beobachtet werden, welcher Befüllungs- oder Entlüftungsvorgang dann automatisch abschaltet, wenn der gewünschte Reifeninnendruck erreicht worden ist. Geregelt werden diese Prozesse von der Steuereinrichtung.

### Bezugszeichenliste

- 1: Drehdurchführung
- 2: Stator
- 3: Rotor
- 4: Nabe
- 5: Rad
- 6: Radbolzen
- 7: Reifen
- 8: Luftleitung
- 9: Steuerleitung
- 10: Ventileinheit
- 11: Felge
- 12: Rohrstück
- 13: Reifeninnere
- 14: Drucksensoreinheit
- 15: Drucksensor
- 16: Sender
- 17: Steuereinrichtung
- 18: Signalleitung
- 19: Messschlauch
- 20: Energieübertragungseinheit
- 21: Kabel
- 22: Energiekabel
- 23: Antenne, Sendespule
- 24: Antenne, Empfangsspule
- 25: Ringnut
- 26: Ringnut
- 27: Bewegungsspalt
- 28: Luftführungskammer
- 29: Luftleitung
- 30: Anschlussbohrung
- 31: Sockelschraube
- 32: Boden
- 33: Anschlussleitung
- 34: Sockelschraube
- 35: Anschlussleitung
- M: Messstelle

## Patentansprüche

1. Drehdurchführung für eine Reifendruckregelanlage zum Übertragen von Druckluft, zugeführt von einer fahrzeugseitig angeordneten Druckluftquelle, an ein drehbar gelagertes, den Reifen (7) tragendes Rad (5), umfassend einen Stator (2) und einen Rotor (3), wobei der Drehdurchführung (1) eine berührungslos ausgelegt arbeitende Energieübertragungseinheit (20) zum Übertragen von für den Betrieb der Drucksensoreinheit (14) benötigter elektrischer Energie zugeordnet ist, welche Energieübertragungseinheit (20) zum Übertragen der Energie über zumindest ein Antennenpaar verfügt, von welchen beiden Antennen (23, 24) eines Antennenpaares eine Antenne (23) statorseitig und die andere Antenne (24) rotorseitig und die Antennen (23, 24) bezüglich eines den Rotor (3) von dem Stator (2) trennenden Bewegungsspaltes (27) einander gegenüberliegend angeordnet sind, **dadurch gekennzeichnet, dass** die Antennen (23, 24), durch den Bewegungsspalt (27) getrennt, axial nebeneinander liegend angeordnet sind und dass die Drehdurchführung (1) zum Zwecke einer Luftübertragung eine statorseitig angeordnete und zum Rotor (3) weisend offene Ringnut als Luftführungskammer (28) aufweist und die einer Energie- und/oder Datenübertragung dienenden Antennen (23, 24) in dieser Ringnut (28) angeordnet sind.

2. Drehdurchführung nach Anspruch 1, **dadurch gekennzeichnet, dass** die Antennen (23, 24) als auf einer Ringplatine (R) aufgedruckte Leiter ausgeführt sind.

3. Drehdurchführung nach Anspruch 1 oder 2, **dadurch gekennzeichnet, dass** die Antennen (23, 24) elektrisch isoliert in der Ringnut (28) bzw. in die Ringnut (28) eingreifend aufgehängt sind.

4. Drehdurchführung nach Anspruch 3, **dadurch gekennzeichnet, dass** zur elektrischen Isolierung der Antennen (23, 24) von dem Stator (2) bzw. dem Rotor (3) diese von dem Boden (32) und den Wänden der Ringnut (28) beabstandet gehalten sind.

5. Drehdurchführung nach Anspruch 3 oder 4, **dadurch gekennzeichnet, dass** die Antennen (23, 24) mittels Sockelschrauben (31, 34) an den Stator (2) bzw. den Rotor (3) angeschlossen sind.

6. Reifendruckregelanlage für ein Kraftfahrzeug mit einer Drehdurchführung nach einem der Ansprüche 1 bis 5, weiter umfassend eine den Rotor (3) der Drehdurchführung (1) mit dem Reifen (7) verbindende Luftleitung (8) sowie einen mit seinen Signalen eine fahrzeugseitig angeordnete Steuereinrichtung (17) beaufschlagenden Drucksensor (15), wobei der Drucksensor (15) als Teil einer Drucksensoreinheit (14) dem drehbar gelagerten Rad (5) zugeordnet ist.

7. Reifendruckregelanlage nach Anspruch 6, **dadurch gekennzeichnet, dass** die Drucksensoreinheit (14) zum Messen des Reifeninnendruckes an einer von der, bedingt durch die Änderung des Reifeninnendruckes, strömenden Luft unbeeinflussten oder weitgehend unbeeinflussten Messstelle angeordnet oder zum Erfassen des Reifeninnendruckes an einer solchen Messstelle ausgebildet ist.

8. Reifendruckregelanlage nach Anspruch 7, **dadurch gekennzeichnet, dass** die Messstelle (M) zur Druckmessung innerhalb des Reifens (7) mit Abstand zu der die Felge (11) durchgreifenden Öffnung zum Zuführen oder Entnehmen von Luft in bzw. aus dem Reifen (7) angeordnet ist.

9. Reifendruckregelanlage nach Anspruch 8, **dadurch gekennzeichnet, dass** die Messstelle (M) der Öffnung bezüglich der Drehachse des Rades (5) gegenüberliegend angeordnet ist.

10. Reifendruckregelanlage nach Anspruch 8 oder 9, **dadurch gekennzeichnet, dass** der Drucksensor (15) außerhalb der Felge (11) des Rades (5) angeordnet ist und die Drucksensoreinheit (14) über eine die Felge (11) durchgreifende Öffnung zum Zuführen oder Entnehmen von Luft in bzw. aus dem Reifen (7) durchgreifende und sich mit ihrem freien offenen Ende bis zur Messstelle (M) erstreckende Messleitung (19) verfügt.

## Claims

1. Rotary feed-through for a tyre pressure regulating assembly for transferring compressed air, supplied by a compressed air source arranged on the vehicle side, to a rotatably supported wheel (5) which carries the tyre (7), comprising a stator (2) and a rotor (3), wherein the rotary feed-through (1) is assigned a contact-less power transmission device (20) for transmitting electrical energy required for the operation of the pressure sensor unit (14), said power transmission device (20) for transmitting the energy having at least one antenna pair wherein, of two antennae (23, 24) of an antenna pair, one antenna (23) is arranged on the stator side and the other antenna (24) is arranged on the rotor side and the antennae (23, 24), in respect of a movement gap (27) that separates the rotor (3) from the stator (2), are arranged opposite each other, **characterised in that** the antennae (23, 24), separated by the movement gap (27), are arranged axially next to each other and that the rotary feed-through (1), for the purpose of air transfer, has an open ring groove, as an air conduction chamber (28), arranged on the stator side and facing the rotor (3) and the antennae (23, 24) which serve to transmit energy and/or data are arranged in this ring groove (28).

2. Rotary feed-through according to claim 1, **characterised in that** the antennae (23, 24) are designed as conductors printed onto an annular board (R).

3. Rotary feed-through according to claim 1 or 2, **characterised in that** the antennae (23, 24) are electrically insulated in the ring groove (28) or suspended so as to engage the ring groove (28).

4. Rotary feed-through according to claim 3, **characterised in that**, for the electrical insulation of the antennae (23, 24) from the stator (2) or the rotor (3), these are kept distanced from the floor (32) and the walls of the ring groove (28).

5. Rotary feed-through according to claim 3 or 4, **characterised in that** the antennae (23, 24) are connected, using socket screws (31, 34), to the stator (2) or the rotor (3).

6. Tyre pressure regulating assembly for a motor vehicle with a rotary feed-through according to one of the claims 1 to 5, further comprising an air-line (8) connecting the rotor (3) of the rotary feed-through (1) with the tyre (7) as well as a pressure sensor (15) which provides a control device (17), that is arranged on the vehicle side, with its signals, wherein the pressure sensor (15), as part of a pressure sensor unit (14), is assigned to the rotatably supported wheel (5).

7. Tyre pressure regulating assembly according to claim 6, **characterised in that** the pressure sensor unit (14) for measuring the inner tyre pressure is arranged at a measuring point unaffected or largely unaffected by the air flowing due to the change in inner tyre pressure or designed to capture the inner tyre pressure at such a measuring point.

8. Tyre pressure regulating assembly according to claim 7, **characterised in that** the measuring point (M) for pressure measurement within the tyre (7) is arranged distanced from the opening penetrating the rim (11) for supplying or removing air to or from the tyre (7).

9. Tyre pressure regulating assembly according to claim 8, **characterised in that** the measuring point (M) is arranged opposite the opening in respect of the rotation axis of the wheel (5).

10. Tyre pressure regulating assembly according to claim 8 or 9, **characterised in that** the pressure sensor (15) is arranged outside the rim (11) of the wheel (5) and the pressure sensor unit (14) has an opening which penetrates the rim (11) for supplying or removing air to or from the tyre (7) and a measuring line (19) which extends, with its free open end, up to the measuring point (M).

## Revendications

1. Passage tournant pour une installation de réglage de la pression des pneus destinée à transférer de l'air comprimé, acheminé à partir d'une source d'air comprimé disposée du côté du véhicule, sur une roue (5), supportant un pneu (7), montée de façon rotative, comprenant un stator (2) et un rotor (3), une unité de transfert d'énergie (20) conçue pour fonctionner sans contact et destinée à transférer l'énergie électrique nécessaire pour faire fonctionner l'unité à capteur de pression (14) étant affectée au passage tournant (1), laquelle unité de transfert d'énergie (20) dispose, afin de transférer l'énergie, d'au moins une paire d'antennes, parmi lesquelles deux antennes (23, 24) d'une paire d'antennes, une antenne (23) est disposée du côté du stator, l'autre antenne (24) du côté du rotor, et les deux antennes (23, 24) sont disposées en se faisant face de part et d'autre d'un intervalle de mouvement (27) séparant le rotor (3) du stator (2), **caractérisé en ce que** les antennes (23, 24) sont disposées, séparées par l'intervalle de mouvement (27), en étant placées axialement côte à côte et que le passage tournant (1) présente à des fins de transfert d'air, une rainure circulaire ouverte, disposée du côté du stator et orientée vers le rotor (3), qui fait office de chambre de guidage d'air (28) et que les antennes (23, 24) servant au transfert d'énergie et/ou de données sont disposées dans cette rainure circulaire (28).

2. Passage tournant selon la revendication 1, **caractérisé en ce que** les antennes (23, 24) sont réalisées sous la forme d'un conducteur imprimé sur une platine circulaire (R).

3. Passage tournant selon la revendication 1 ou 2, **caractérisé en ce que** les antennes (23, 24) sont suspendues dans la rainure circulaire (28) en étant électriquement isolées ou en s'engageant dans la rainure circulaire (28).

4. Passage tournant selon la revendication 3, **caractérisé en ce que** pour isoler électriquement les antennes (23, 24) du stator (2) ou du rotor (3) celles-ci sont maintenues en conservant un intervalle par rapport au fond (32) et aux parois de la rainure circulaire (28).

5. Passage tournant selon la revendication 3 ou 4, **caractérisé en ce que** les antennes (23, 24) sont raccordées au stator (2) ou au rotor (3) à l'aide de vis à socle (31, 34).

6. Installation de réglage de la pression des pneus pour un véhicule à moteur munie d'un passage tournant selon l'une des revendications 1 à 5, comprenant par ailleurs un conduit d'air (8) reliant le rotor (3) du passage tournant (1) avec le pneu (7) ainsi qu'un capteur de pression (15) envoyant ses signaux à un dispositif de commande (17) placé du côté du véhicule, lequel capteur de pression (15), en tant que partie d'une unité à capteur de pression (14), est affecté à la roue (5) logée de façon rotative.

7. Installation de réglage de la pression des pneus selon la revendication 6, **caractérisée en ce que** l'unité à capteur de pression (14) est disposée, afin de mesurer la pression interne des pneus, à un point de mesure non influencé ou largement non influencé par l'air en circulation dû à la variation de la pression interne des pneus ou qu'elle est conformée sur un tel point de mesure afin de détecter la pression interne des pneus.

8. Installation de réglage de la pression des pneus selon la revendication 7 **caractérisée en ce que** le point de mesure (M) est disposé, dans le but de mesurer la pression, à l'intérieur du pneu (7), à distance de l'ouverture qui traverse la jante (11) afin d'acheminer ou de prélever de l'air dans le pneu (7).

9. Installation de réglage de la pression des pneus selon la revendication 8 **caractérisée en ce que** le point de mesure (M) de l'ouverture est disposé à l'opposé par rapport à l'axe de rotation de la roue (5).

10. Installation de réglage de la pression des pneus selon la revendication 8 ou 9 **caractérisée en ce que** le capteur de pression (15) est disposé hors de la jante (11) de la roue (5) et que l'unité à capteur de pression (14) dispose d'une ligne de mesure (19) traversant une ouverture traversant la jante (11) afin d'acheminer ou de prélever de l'air dans le pneu (7) et s'étendant avec son extrémité libre ouverte jusqu'au point de mesure (M).
